# EUROPEAN PATENT SPECIFICATION

(11) **EP 2 773 189 B1**
(45) Date of publication and mention of the grant of the patent: **10.10.2018**
(21) Application number: 12845805.6
(22) Date of filing: 01.11.2012
(51) Int. Cl.: A01K 61/60, A01K 61/13

(54) **FISH FARMING NET CAGE AND A METHOD OF REDUCING EXPOSURE OF FARMED FISH TO PATHOGENIC PLANKTON UPON USE THEREOF**
FISCHZUCHT-NETZKÄFIG UND VERFAHREN ZUR VERRINGERUNG DER AUSSETZUNG VON ZUCHTFISCHEN GEGEN PATHOGENES PLANKTON BEI DER VERWENDUNG DIESES NETZKÄFIGS
ENCLOS EN FILET DE PISCICULTURE ET PROCÉDÉ PERMETTANT DE RÉDUIRE L'EXPOSITION DES POISSONS D'ÉLEVAGE AU PLANCTON PATHOGÈNE LORS DE SON UTILISATION

(30) Priority: 03.11.2011 NO 20111512; 26.10.2012 NO 20121257
(43) Date of publication of application: 10.09.2014
(73) Proprietor: Egersund Net AS, 4379 Egersund (NO)
(72) Inventor: VIK, Geirmund, N-4330 Ålgård (NO)
(74) Representative: Håmsø Patentbyrå AS
(86) International application number: PCT/NO2012/050213
(87) International publication number: WO 2013/066191

(56) References cited:
- EP-A2- 0 146 518
- WO-A1-89/06902
- WO-A1-89/06902
- WO-A1-93/04576
- WO-A1-93/04576
- WO-A2-2009/085987
- NO-A- 20 034 456
- NO-B- 177 551
- US-A- 4 744 331

## Description

The invention relates to a net cage for farming fish. In particular, the invention relates to a net cage in which the fish enclosure is provided with a submerged fish-dismissing ceiling that keeps the fish confined in a water column down at a depth at which the exposure of the fish to eukaryotic organisms like plankton is reduced, and in which, extending from the fish-dismissing ceiling to the water surface, there is a connection channel which projects above the water surface.

Fish farming in seawater normally takes place in floating enclosures formed from nets. Such enclosures are termed open cages. Seawater is flowing substantially horizontally through the net cages. This provides for replacement of the water in the net cages, so that the fish is supplied with water rich in oxygen. The net may have a mesh size which is adapted to the size of the fish and such that the net is fish-dismissing, meaning that fish cannot swim through the net and out of the enclosure. Such net cages are provided with a so-called jump net projecting up above the water surface and extending along the outer edge of the net cage. The jump net prevents fish from escaping by jumping out of the net cage over the upper edge of the net cage.

To prevent fish predating birds from attacking the fish in the net cage, it is common to extend a so-called bird net over the cage to bar the birds out. This net must be kept at a certain distance from the water to prevent the birds from sitting on the net and weighing it down, so that the birds may get hold of the fish through the net.

It is common to use circular net cages. These may have a circumference of over 100 m and a diameter of over 30 m. To be able to keep a net extended over a cage of a size like that, it is usual to place one or more floating supports for the net inside the net cage. One such type of support is known as a hamster wheel because of its shape. Another type of support may be formed as a tower.

The hamster wheel may be made of plastic tubes welded together. In its position of application, the hamster wheel has a lower floating ring and an upper top ring. Vertical posts extend between the rings. The hamster wheels are relatively big and may be formed with a circumference of between 30 m and 72 m, for example. The height may be 3 m, for example. The floating ring may be filled with a buoyancy material.

The tower may also be made of plastic tubes welded together. The tower may have a smaller circumference than the hamster wheel. The tower may be higher than the hamster wheel. The tower will have slanting posts extending upwards from a floating element. The posts are held fixed at their upper portion by a top ring. The floating element may be annular or polygonal.

It is known that fish in open cages may be exposed to toxic, planktonic algae or algal toxins in the water during algal blooms. Fish in open cages may also be exposed to parasites present in the seawater. In particular, external crustaceous parasites like salmon louse (*Lepeophtheirus salmonis*) and other *Caligus* species are a problem in the farming of salmonoids such as salmon (*Salmo salar*) and rainbow trout (*Oncorhynchus mykiss*) in the sea. Salmon louse and other crustaceous parasites have a large reproductive potential. In several countries, there are regulatory requirements for infections with crustaceous parasites to be treated with medicaments to keep the number of parasites below defined levels. Treatment is carried out with medicaments that are mixed into the water or into the feed. Medicaments that are mixed into the water include hydrogen peroxide, pyretroids, pyrethrum and organophosphates. Treating fish with medicaments that are mixed into the water is a relatively extensive operation. The operation is referred to as bath treatment. By bath treatment of net cages, it is common to raise the netting so that the depth within the enclosure is reduced from, for example, 15 m to about 4 m. A skirt is placed on the outside of the net wall around the entire enclosure and so that it extends deeper than the raised netting. The depth of the skirt may be 6 m, for example. Net cages may have a circumference of from 70 m, for example, to 160 m, for example. In this way the volume in which the fish may swim is reduced, and the skirt will prevent chemicals that are mixed into the water in the net cage from drifting away with the water flow. When the treatment period is completed, the skirt is removed and the medicament drifts out of the net cage and is diluted in the water. The netting is lowered to its usual depth again. In some countries, the use of a skirt is not satisfactory, and it is a regulatory requirement that bath treatment should be carried out with a tarpaulin or cloth surrounding the enclosure on the underside and on the sides so that the net cage is closed. It is necessary to supply air or oxygen to the enclosure during the bath treatment in order to maintain a satisfactory oxygen level in the water.

Like other crustaceans, salmon lice grow by ecdysis and they go through 10 stages altogether. First, a free-swimming nauplius is released from the egg: a nauplius I larva. In *L. salmonis,* this is 0.5 mm long. The nauplius I grows into a nauplius II larva, 0.6 mm long which, in its turn, grows into an infectious copepodid, 0.7 mm long. The three first stages may last for several weeks, and the duration depends of the water temperature. By low water temperatures, the larvae grow slowly. The small larvae have a limited ability to move actively in the water and will, in the main, be drifting with the water flow. Wild salmon move in the upper water layers. Salmon lice are adapted to staying in the upper water layers to increase the chance of meeting a host.

In what follows, plankton will denote algal plankton and animal plankton. The three first free-living or pelagic stages of fish lice will be counted as animal plankton here.

It is known that so-called closed cages will reduce the problem of toxic algae and salmon lice. Such cages are floating in the water surface and are formed with tight walls. The water is brought up from deeper water layers and pumped into the cage. Planktonic algae and crustaceous parasites do not go that deep, so that the water that is supplied to a closed cage will be free of these undesired organisms.

It is also known that open cages may be closed at the top with a further net and be lowered below the water surface. The patent document NO 20034456 discloses one example of a design of such an open cage which may be lowered and raised. The net forming the closed top of the net cage is provided with a closable opening. The net cage may be lowered so deep that the fish come deeper than the layer with toxic planktonic algae or the layer with salmon louse larvae. The net cage is provided with a funnel that extends from the top net of the net cage to the water surface to the floating element of the net cage. The funnel does not project above the floating element. The funnel may be connected to a feeding plant which delivers feed to the net cage. The feed sinks down through the funnel. In another embodiment, a separate feeding tube may be lowered through the funnel. The funnel may also be arranged to guide equipment like underwater lights, a dead-fish landing net, measuring instruments and monitoring equipment down to and into the submerged net cage. The funnel may be constituted by a rubber bellows.

The patent document NO 880384 (family member of WO 89/06902) discloses a net cage in which, in its upper portion, the net bag of the net cage tapers into a top area. The circumference of the top area is smaller than the circumference of the net bag in a deeper portion. The net cage may have a bottlelike shape. The net cage is kept afloat by means of a floating element attached to the top area / "neck" of the net cage. The top area does not project above the floating element. The net cage is constituted by the same material in the top area / "neck" as in the transition portion of the cage and in the deepest portion of the net cage.

The salmonoid family Salmonidae belongs to the so-called physostomous fish. This means that they have an open swim bladder with connection to the throat of the fish. To keep the swim bladder filled with gas, the fish has to go to the water surface to swallow air. Trials have shown that salmon kept in net cages at a depth larger than 4 m and with underwater lights, can manage for 22 days without access to air, and without growth and survival being negatively affected. Salmon kept deeper than 10 m in winter and without underwater lights, lost the air in the swim bladder within three weeks. The fish increased its swimming activity to stay in the water column, had reduced appetite and the feed utilization was poorer. The fish got increased fin wear and there were signs of beginning deformation of the vertebrae (Korsøen, Ø.J., 2011. Biological criteria for submergence of physostome (Atlantic salmon) and physoclist (Atlantic cod) fish in sea-cages, PhD Thesis, University of Bergen, Norway).

The patent document NO 153991 discloses one solution for salmonoids in a submerged net cage to have access to air. In a portion of the upper net wall of the net cage, the net cage is provided with an air dome which forms an artificial water surface down in the water column. The air dome is supplied with air from the surface.

The invention has for its object to remedy or reduce at least one of the drawbacks of the prior art or at least provide a useful alternative to the prior art.

The object is achieved through features which are specified in the description below and in the claims that follow.

In a first aspect, the invention relates to a net cage for farming fish, according to claim 1, the net cage including a fish enclosure which is provided with a net which is capable of water throughput, and first floating means on a water surface to keep the net cage in a vertical position in a water column, the fish enclosure further being provided with a submerged, fish-dismissing ceiling, the fish-dismissing ceiling being provided with at least one opening which is connected to a connection channel projecting up from the fish-dismissing ceiling, and the connection channel being arranged for fish in the fish enclosure to swim spontaneously to the water surface in the connection channel and back down to the fish enclosure, and a jacket of the connection channel being provided, in an upper portion, with a swash portion that projects above the water surface. The net which is capable of water throughput may be constituted by a netting as it is known within the art.

The side walls of the net cage may extend downwards from the first floating means. The advantage of this embodiment is that the fish-dismissing ceiling is attached to the side walls of a known, open cage, and that the mooring systems of the net cage may be used without modifications.

At its upper portion, the connection channel is attached to a second floating means. The second floating means may be moored to the net cage so that the connection channel maintains its horizontal position relative to the net cage.

In an upper part, the submerged jacket of the connection channel is constituted, according to the invention, by a watertight, rigid material such as a plastic or a metal, or by a watertight material in cloth form, or by a plankton-dismissing net material. These three embodiments have the advantage of pathogenic plankton in the upper water layers, which are flowing horizontally through the water column of the net cage, being barred out from the water inside the connection channel. Fish may thereby swim up to the water surface from the fish enclosure and down again without being exposed to pathogenic plankton. In the embodiment having a jacket of a watertight rigid material or a watertight material in cloth form, the fish will not be exposed to algal toxins in the water.

The swash portion may comprise a watertight material. The swash portion may comprise a plankton-dismissing net material. In a portion projecting above the water surface, the jacket of the connection channel may further, in a portion, include a jump net. The upper portion of the connection channel may be covered with a bird net. The upper portion of the connection channel may be covered with a fish-dismissing net. The fish-dismissing ceiling may include a net. The net may include a netting of the same type as that of the side wall of the net cage. At its edge portion, the net may be provided with a zip for attachment to a complementary zip attached to the side wall of the net cage. In an alternative embodiment, the net may be provided, at its edge portion, with a reinforcing edge band which is sewed to a so-called belly band in the side wall of the net cage.

In a second aspect, the invention relates to a method of farming physostomous fish in a submerged fish enclosure according to claim 11. The spontaneous swimming may be achieved by the connection channel being wide enough. It may be advantageous to entice the fish into swimming in the connection channel by letting fish feed sink down to the fish enclosure through the connection channel. It may be further advantageous to provide the connection channel with a watertight jacket in an upper submerged portion and supply the connection channel with water from the surroundings so that a vertical current is created in the connection channel. This has the advantage of fish being enticed into swimming up into the connection channel. It is further advantageous that the water is taken from a water depth substantially free from plankton. The water depth may vary with the seasons and may be determined from, for example, water temperature and algal blooms.

It may be further advantageous to provide the connection channel with a watertight jacket in an upper submerged portion and supply the water inside the connection channel with a medicament made for the bath treatment of fish. Such a medicament may be selected from a group including hydrogen peroxide, pyretroids, pyrethrum and organophosphates. This has the advantage of the water volume, to which the medicament is to be added, being substantially smaller than in the bath treatment of fish in a net cage with its netting lifted and with a skirt around the side wall of the net cage or with a cloth or tarpaulin under and around the net cage. It has further the advantage of not requiring the work of lifting the netting and positioning the skirt or the tarpaulin. It has further the advantage of making it possible for some of the medicament to be collected again from the connection channel and be destroyed.

In a third aspect, the invention relates to the use of a net cage as described above to prevent farmed physostomous fish from being exposed to toxic planktonic algae or planktonic crustaceous parasites, according to claim 15.

In what follows, examples of preferred embodiments are described, which are visualized in the accompanying drawings, in which:
- Figures 1A-B: show schematically a net cage in accordance with the invention, viewed from the side (A) and from above (B);
- Figures 2A-B: show schematically the same as figure 1, but in another embodiment;
- Figures 3A-B: show schematically, viewed from above, a net cage in another embodiment and with the invention in two alternative embodiments;
- Figure 4: shows schematically, from the side and in a greater detail, a connection channel in accordance with the invention;
- Figures 5A-B: show alternative embodiments of the connection channel;
- Figure 6: shows a further alternative embodiment of a submerged net cage;
- Figures 7A-B: show a further alternative embodiment, in which the connection channel is arranged at a hamster wheel; and
- Figures 8A-B: show a further alternative embodiment, in which the connection channel is arranged at a tower.

The drawings that follow are schematic and the different parts are drawn on different scales.

In the drawings, the reference numeral 1 indicates a net cage in accordance with the invention. The net cage 1 includes a net 2 forming a fish enclosure 3, first floating means 4 in a water surface 5 and a connection channel 6 projecting up from a fish-dismissing ceiling 22. The fish-dismissing ceiling 22 extends over the fish enclosure 3. The connection channel 6 projects up above the water surface 5. The net 2 includes a side wall 24 and a bottom 26.

The connection channel 6 is attached to the ceiling 22 in an opening 28 in such a way that fish cannot swim out of the fish enclosure 3 between the jacket 62 of the connection channel 6 and the ceiling 22. The connection channel 6 is formed with a sufficient cross-sectional area for fish in the fish enclosure 3 to be able to swim spontaneously to the water surface 5 and down again to the fish enclosure 3. The connection channel 6 may have a cross section of, for example, 2 m, 3 m or larger.

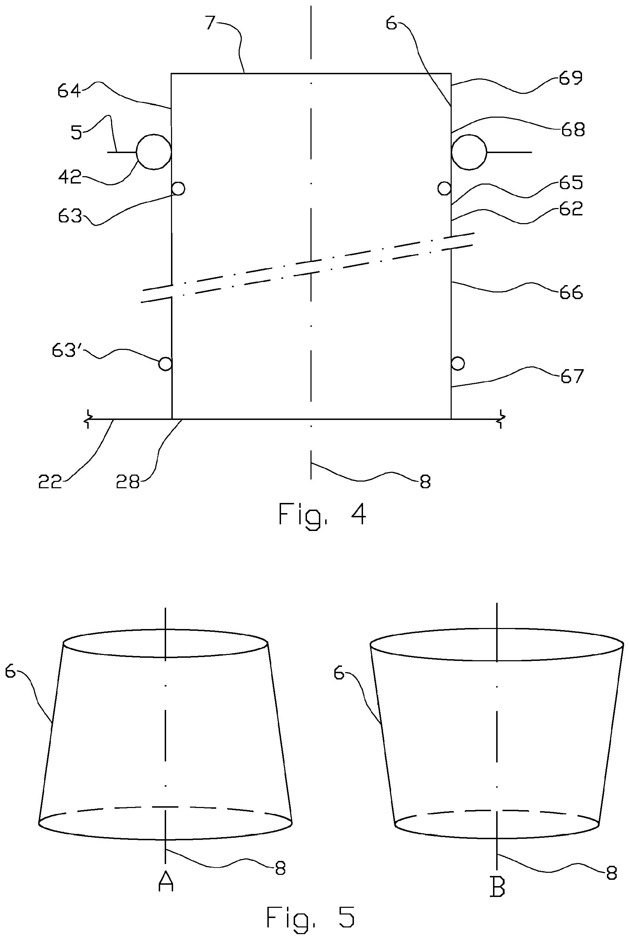

The connection channel 6 is made up of an upper portion 64 which projects up above the water surface 5 and a submerged portion 66 which extends from the water surface 5 to the fish-dismissing ceiling 22 as shown in figure 4. The upper portion 64 is surrounded by a second floating means 42 in the water surface 5. The jacket 62 of the connection channel 6 may be constituted by one material or be assembled from several types of material. In an upper part 65 from the water surface 5 down to a depth which is assessed as deep enough for toxic algae and/or parasitic crustaceous larvae to stay above this depth, the jacket 62 is constituted by a watertight material. In an alternative embodiment, the portion 65 is constituted by a plankton-dismissing net capable of water throughput. Such a plankton-dismissing net may have an aperture of 300 µm. In a lower part 67 of the submerged portion 66, the lower part 67 extending from the fish-dismissing ceiling 22 to the upper part 65, the jacket 62 may be constituted by a fish-dismissing net. In a further alternative embodiment, both the upper part 65 and the lower part 67 may be constituted by a watertight material. This enables the creation of a downward water current within the connection channel 6 by supplying water to the connection channel 6. Such a water current will stimulate salmonoids to move upwards in the connection channel 6 and up to the water surface 5.

The jacket 62 of the upper portion 64 of the connection channel 6, projecting above the water surface 5, is constituted in a lower part 68 by a watertight material. The lower part 68 forms a swash portion 68. The swash portion 68 may extend for example 1 metre above the water surface 5. In an alternative embodiment, the swash portion 68 may be constituted by a plankton-dismissing cloth or a plankton-dismissing net. The swash portion 68 extends so much above the water surface 5 that undesired plankton is prevented from being splashed or swashed into the connection channel 6. When a downward water current is created within the connection channel 6, the lower part 68 is constituted by a watertight material. The water creating the downward water current in the connection channel 6, may be pumped up from a water depth which is counted as free from undesired plankton. The water depth may vary with the seasons and may be determined from, for example, water temperature and algal blooms.

The upper part 69 of the upper portion 64 of the connection channel 6 is constituted by a jump net 69 of a kind known *per se.* The jump net 69 may constitute part of the jacket 62. In an alternative embodiment, the jump net 69 surrounds the connection channel 6 without constituting part of the jacket 62. In this embodiment, the jump net 69 is independently attached to the second floating means 42. The second floating means 42 may be constituted by one or more circular floating rings having a centre substantially coinciding with the vertical centre axis 8 of the connection channel 6.

The net cage 1 may be provided with a so-called bird net 7 of a kind known *per se*, to prevent predatory birds from getting access to the fish in the net cage 1. According to the invention, the fish in the net cage 1 will be kept inside the fish enclosure 3 by the side wall 24, the bottom 26 and the fish-dismissing ceiling 22. Diving predatory birds will therefore be unable to penetrate into the fish enclosure 3. According to the invention, it will therefore be sufficient to extend the bird net 7 over the projecting upper portion 64 of the connection channel 6.

In an alternative embodiment, the bird net 7 may be constituted by a net 7 of a smaller mesh size. The net 7 may be of the same type as the net constituting the fish-dismissing ceiling 22, or the side wall 24 or the bottom 26. This has the advantage of the entire connecting channel 6 being submersible without the fish in the enclosure 3 being able to swim out through the connection channel 6. De-icing of the upper portion 64 of the connection channel 6 may be carried out by submerging the entire connection channel 6. The net 7 will also prevent the escape of fish from the connection channel 6 by large wave height, as the waves may wash over the jacket 62 of the connection channel 6.

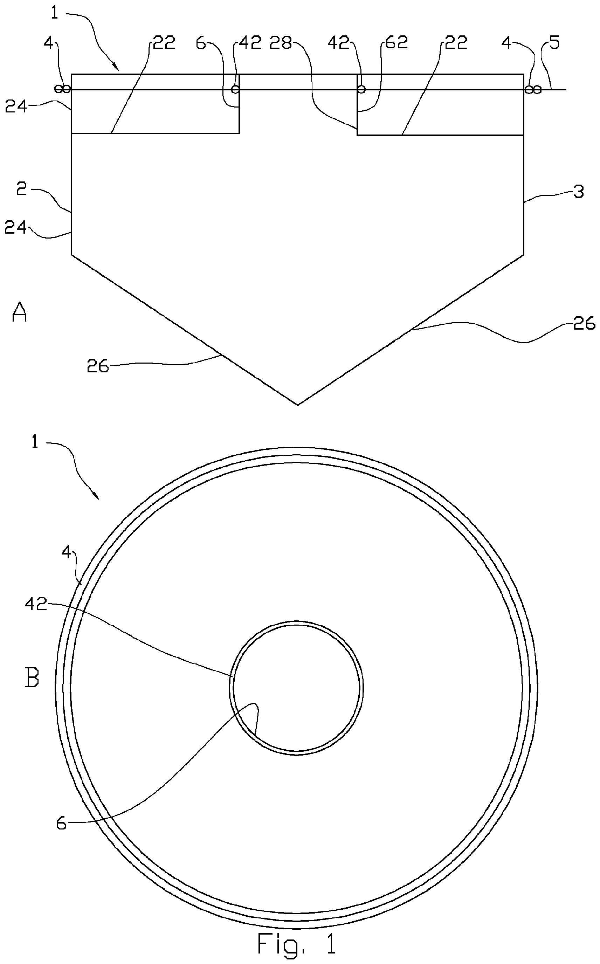

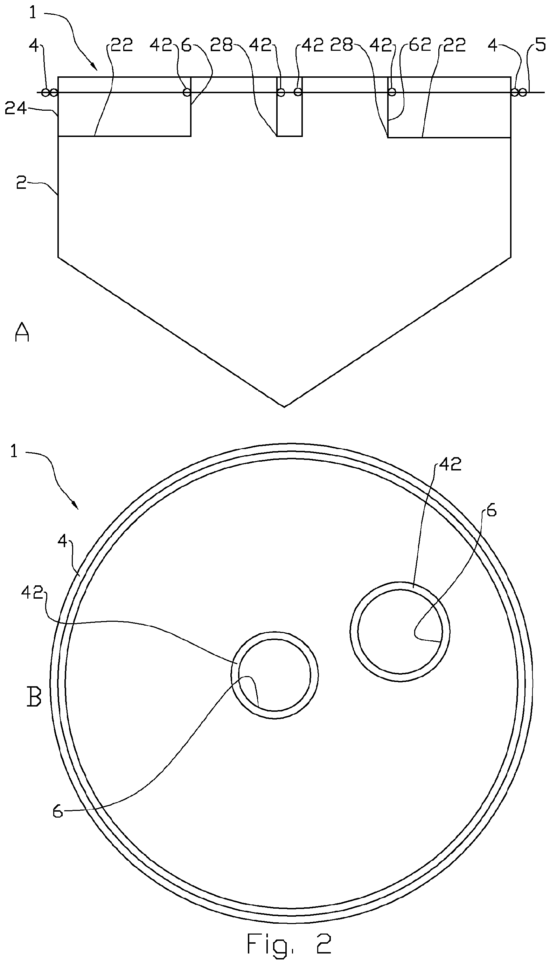

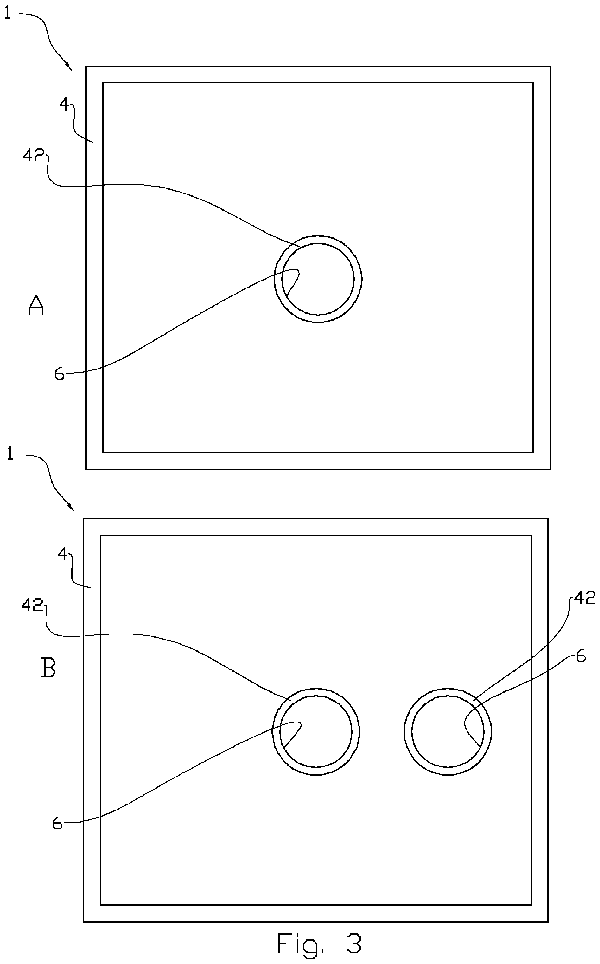

Especially in large net cages 1 it may be advantageous to have more than one connection channel 6. Figures 2A, B and figure 3B show alternative embodiments of net cages 1 with two connection channels 6. The person skilled in the art will appreciate that one net cage 1 may also be provided with more than two connection channels 6. The net cages 1 may be circular as shown in figures 1A, B and figures 2A, B, or be rectangular as shown in figures 3A, B. It is within the art to use the invention on net cages 1 of other geometries.

The fish-dismissing ceiling 22 may be attached internally to the side wall 24 in several ways. At a desired depth, the side wall 24 may be provided with a line (not shown) which is sewn into the net meshes of the side wall 24. Such a line is known as a so-called belly band. This may be done on the netting of existing net cages 1 by pulling the netting up until the desired depth comes out of the water. The fish-dismissing ceiling 22 is provided with a reinforcing band (not shown) at its edges. Then, along its edges, the fish-dismissing ceiling 22 is sewn to the belly band in the side wall 24. The netting is finally submerged again and the fish-dismissing ceiling 22 will position itself at the desired depth and keep the fish within the net cage 1 below the fish-dismissing ceiling 22. An alternative method may be to provide the edge portion of the fish-dismissing ceiling 22 with a zip half (not shown) which complementarily fits a zip half (not shown) attached to the side wall 26. The zip half of the side wall 24 may be attached to a belly band.

The connection channel 6 may be attached to the fish-dismissing ceiling 22 in the same way as that described for how the fish-dismissing ceiling 22 may be attached to the side wall 24.

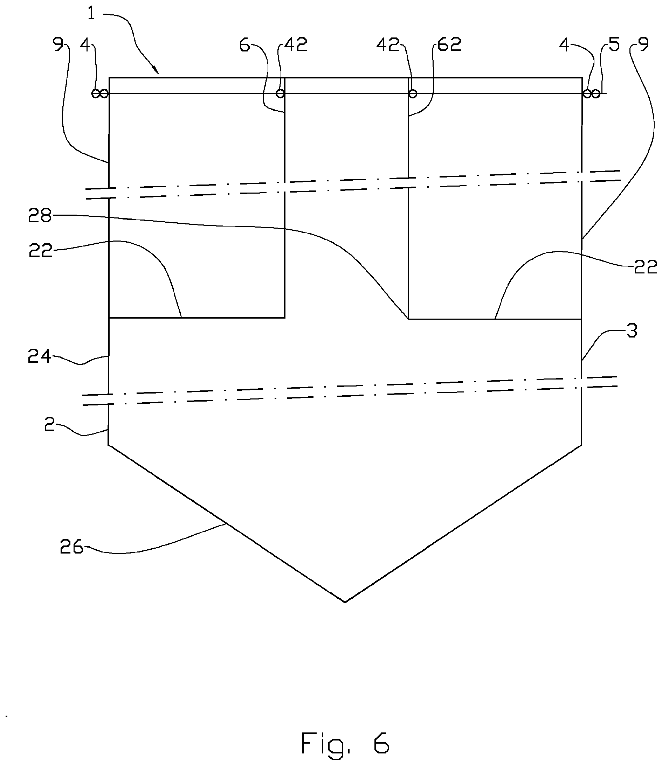

In an alternative embodiment, the fish enclosure 3 may be supported by lines 9 extending from the first floating means 4 to the side wall 24. In this embodiment, which is shown in figure 6, the enclosure 3 may be lowered to the desired depth independently of the vertical extent of the side wall 24. The connection channel 6 is made long enough.

The connection channel 6 may substantially be formed as a cylinder, as shown in figures 1-4 and 6. Figures 5A, B show alternative embodiments of the connection channel 6. The person skilled in the art will know that even other embodiments are possible, and that the connection channel 6 may be formed with a cross section other than a substantially circular cross section. The connection channel 6 may be assembled from rigid panels or from a material in cloth form or from a material in cloth form attached to a framework. The connection channel 6 may be provided with one or more braces 63, 63' which give the connection channel 6 the desired cross-sectional shape. The brace 63 may be positioned on the inside of the connection channel 6, or the brace 63' may be positioned on the outside of the connection channel 63'. The connection channel 6 is kept extended in the vertical direction by the second floating means 42 and by attachment to the fish-dismissing ceiling 22. It is advantageous that the connection channel 6 may be shortened and lengthened along the axis 8 to follow wave movements on the water surface 5. This is achieved by the jacket 62 being constituted, in portions, by a material in cloth form which is kept extended by braces 63, 63'. The braces 63, 63' may be annular. The brace 63 may extend helically along the inside of the jacket 62. The brace 63 may extend helically along the outside of the jacket 62.

In one embodiment, in which the swash portion 68 of the connection channel 6 and the uppermost portion of the submerged portion 65 are constituted by a watertight material, the connection channel 6 may be used for bath-treatment of the fish in the enclosure 3. The watertight uppermost portion of the submerged portion 65 may extend for example 0.5 m below the water surface 5 and the swash portion 68 may extend for example 0.5 m above the water surface 5. The medicament is then distributed in the water that is inside the connection channel 6. Such bath treatment may be necessary as some attacks by crustaceous parasites may occur in spite of the fish being kept outside the part of the water column in which most of the crustaceous parasites are found. Such bath treatment may also be relevant when fish are being transferred to the fish enclosure 3 from net cages in which the fish have been staying in the entire water column. This has the advantage of enabling bath treatment to be implemented without work-demanding operations such as raising the netting and putting out a skirt around the enclosure 1. It also has the advantage of the fish being exposed to the medicament only for a short time, so that the concentration may be increased to subject the parasite to a therapeutic dose in a very short time. This has further the advantage of enabling much of the medicament to be pumped out of the connection channel 6 and collected instead of being spread to the surrounding environment. Trials have shown that it may be advantageous to lower the connection channel 6 completely below the water surface 5 so that the fish in the fish enclosure 3 will not have access to the water surface for a period of 2 to 3 days. When the connection channel 6 is raised again so that there is access to the water surface 5 inside the connection channel 6, the fish in the fish enclosure 3 will swim up into the connection channel 6 within 1-3 hours to fill their swim bladders. This spontaneous roaming of physostomous fish may be utilized for a spontaneous bath treatment as described above. Such a spontaneous bath treatment will inflict little stress on the fish.

In this embodiment, gas may also be mixed into the water within the connection channel 6, for example by injecting bubbling gas into the lower portion of the connection channel. Such gas may be ozone to disinfect the inside of the connection channel 6. Treating the inside of the connection channel 6 with ozone gas will also prevent or at least reduce fouling on the inside of the jacket 62. Ozone gas may also be used to reduce fouling on the outside of the jacket 62. The use of ozone gas in the connection channel 6 may also be used therapeutically to treat the fish in the fish enclosure 3 of infectious diseases on gills and skin.

The fish that are kept in the fish enclosure 3 may be fed in the usual way by feed being spread across the water surface 5 within the first floating means 4. The feed will sink down the water column, passing the fish-dismissing ceiling 22, as this may be constituted by a net, in order then to be eaten by the fish in the enclosure 3. To entice the fish into spontaneously swimming up into the connection channel 6, it may be advantageous to distribute some of the feed, or all the feed, in the connection channel 6.

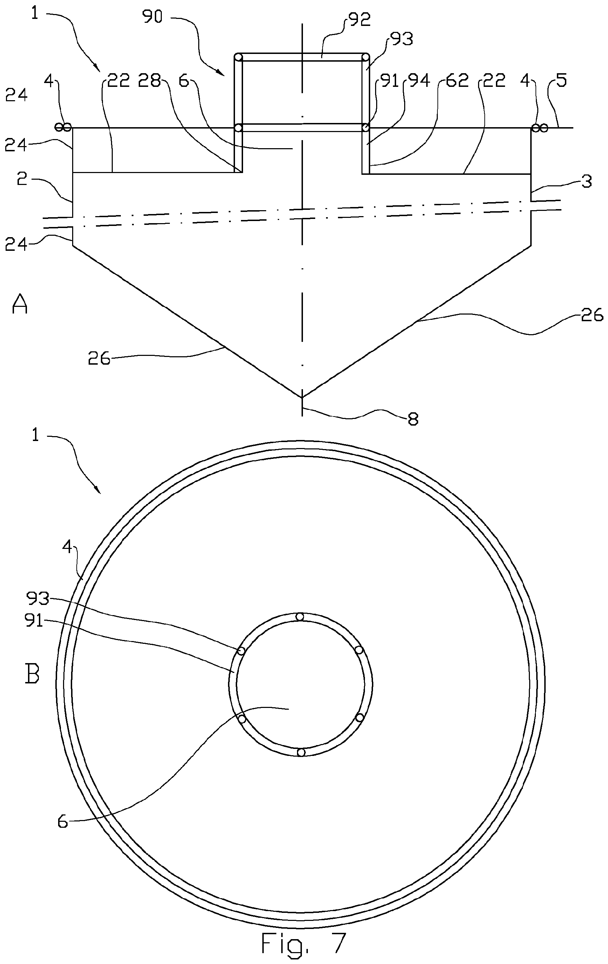

A further alternative embodiment is shown in figures 7A, B. A hamster wheel 90 is positioned in such a way that the centre of the hamster wheel 90 is concentric with the centre axis 8 of the connection channel. The hamster wheel 90 includes a lower floating ring 91 and an upper top ring 92. A plurality of uprights 93 extend from the lower floating ring 91 to the top ring 92 as it is known within the art. At least one rib 94 projects down from the floating ring 91 along the connection channel 6. One or more of the ribs 94 may be positioned on the inside of the jacket 62. One or more of the ribs 94 may be positioned on the outside of the jacket 62. One rib 94 may be a vertical extension of one upright 93. The rib 94 may project down from the floating ring 91 to the ceiling 22. In addition to one or more ribs 94, the connection channel 6 may be provided with one or more braces 63, 63' of the same type as that shown in figure 4. The braces 63, 63' may be formed as described in other embodiments in the above. It is advantageous that the ribs 94 substantially project down side by side from the floating ring 91. It may be advantageous that the number of ribs 94 is four or more. It may be advantageous that the number of ribs 94 is six or more. It may be advantageous that the number of ribs 94 is eight or more.

The rib 94 may be attached to the inner circumference of the floating ring 91. Alternatively, the rib 94 may be attached to the outer circumference of the floating ring 91. In a further alternative, the rib 94 may be attached to the submerged surface of the floating ring 91 between the inner and outer circumferences. In a further alternative, an upright 93 and a rib 94 may be constituted by a continuous element that has been passed through a bore (not shown) of the floating ring 91. In a further alternative, an upright 93 and a rib 94 may be constituted by a continuous element and the floating ring 91 is attached to the side surface of the continuous element.

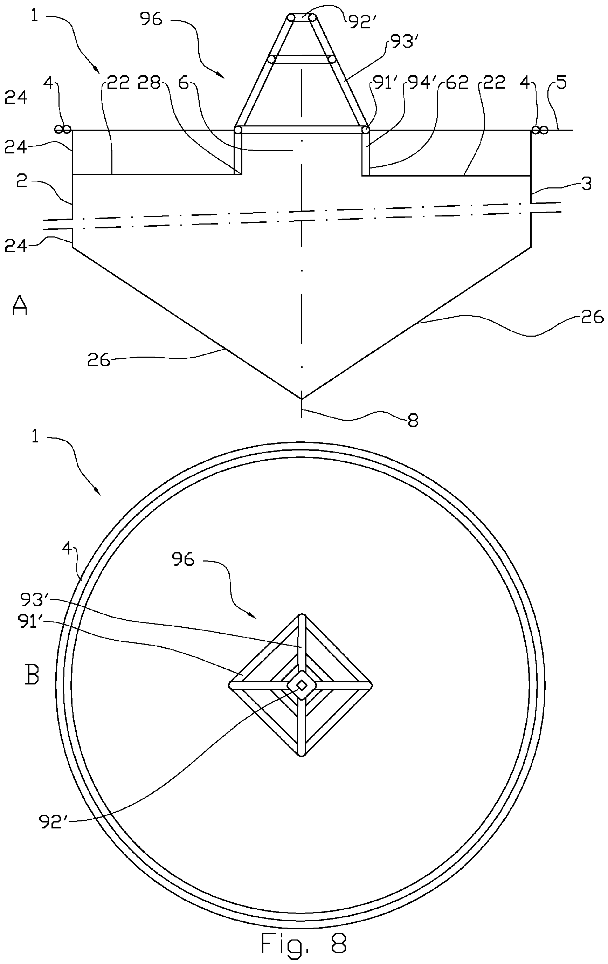

A further alternative embodiment is shown in figure 8A, B. A tower 96 is positioned in such a way that the centre of the tower 96 is concentric with the centre axis 8 of the connection channel. The tower 96 includes a lower floating ring 91' and an upper top ring 92' with a smaller diameter than the floating ring 91'. A plurality of slanting uprights 93' extend from the lower floating ring 91' up to the top ring 92' as it is known within the art. At least one rib 94' projects down from the floating ring 91' along the connection channel 6. One or more of the ribs 94' may be positioned on the inside of the jacket 62. One or more of the ribs 94' may be positioned on the outside of the jacket 62. The rib 94' may project down from the floating ring 91 to the ceiling 22. In addition to one or more ribs 94', the connection channel 6 may be provided with one or more braces 63, 63' of the same type as that shown in figure 4. The braces 63, 63' may be formed as described for other exemplary embodiments in the above.

The rib 94' may be attached to the inner circumference of the floating ring 91'. Alternatively, the rib 94' may be attached to the outer circumference of the floating ring 91. In a further alternative, the rib 94' may be attached to the submerged surface of the floating ring 91' between the inner and outer circumferences. In a further alternative, the floating ring 91' may be attached to the side surface of the rib 94'. It is advantageous that the ribs 94 substantially project down side by side from the floating ring. It may be advantageously that the number of ribs 94 is four or more. It may be advantageous that the number of ribs 94 is six or more. It may be advantageous that the number of ribs 94 is eight or more.

At least one of the ribs 94 of the embodiments may be tubular with an opening in its lower portion and an opening in its upper portion (not shown). The opening in the upper portion faces in towards the connection channel 6. The rib 94 is provided with a pump (not shown) of a kind known *per se,* which is arranged to lift liquid inside a pipe. The pump may be a so-called mammoth pump which creates an upward flow of fluid in a pipe by pumping a gas, for example air, into the lower end portion of the pipe. Water will flow from the lower end portion of the rib 94, up through the rib 94 and out at the upper portion of the rib 94 into the connection channel 6. In the connection channel 6 a downward water flow will be created.

## Claims

1. A net cage (1) for farming fish, the net cage (1) including a fish enclosure (3) which is provided with a net (2) which is capable of water throughput, and a first floating means (4) on a water surface (5) for keeping the net cage (1) in a vertical position in a water column, the fish enclosure (3) further being provided with a submerged, fish-dismissing ceiling (22), the fish-dismissing ceiling (22) being provided with at least one opening (28) which is connected to a connection channel (6) which extends from the fish-dismissing ceiling (22) to the water surface (5) and is connected to a second floating means (42; 91, 91'), wherein the connection channel (6) is arranged for a fish in the fish enclosure (3) to swim spontaneously up to the water surface (5) in the connection channel (6) and back down to the fish enclosure (3), **characterized in that** in an upper portion (64), a jacket (62) of the connection channel (6) is provided with a swash portion (68) projecting above the water surface (5), and that the connection channel's (6) jacket (62) in an upper part (65) of its submerged portion (66) is constituted by one of:
- a watertight, rigid material;
- a watertight material in cloth form; and
- a plankton-dismissing net material.

2. The net cage (1) in accordance with claim 1, **characterized in that** the side wall (24) of the net cage (1) extends downwards from the first floating means (4).

3. The net cage (1) in accordance with claim 1, **characterized in that** the swash portion (68) includes a watertight material.

4. The net cage (1) in accordance with claim 1, **characterized in that** the swash portion (68) includes a plankton-dismissing net material.

5. The net cage (1) in accordance with claim 1, **characterized in that** in the portion (64) projecting above the water surface (5), the jacket (62) of the connection channel (6) includes a jump net.

6. The net cage (1) in accordance with claim 1, **characterized in that** the upper portion (64) of the connection channel (6) is covered with a bird net (7).

7. The net cage (1) in accordance with claim 1, **characterized in that** the upper portion (64) of the connection channel (6) is covered with a fish-dismissing net (7).

8. The net cage (1) in accordance with claim 1, **characterized in that** the fish-dismissing ceiling (22) includes a net.

9. The net cage (1) in accordance with claim 1, **characterized in that** the connection channel (6) is provided with a brace (63).

10. The net cage (1) in accordance with claim 1, **characterized in that** the net cage (1) is provided with a bird-net rack formed as a hamster wheel (90) or a tower (96), the bird-net rack being provided with ribs (94; 94') projecting downwards from the floating ring (91; 91') of the bird-net rack (90; 96), and the connection channel (6) being attached to the bird-net rack (90; 96).

11. A method of farming physostomous fish in a submerged fish enclosure (3) to prevent the fish from being exposed to toxic algae or parasites, **characterized in** the following steps:
a) provide a net cage (1) according to claim 1;
b) provide physostomous fish; and
c) keep the fish in the net cage (1) so that the fish may spontaneously swim up to the water surface (5) in the connection channel (6) and may spontaneously swim back down to the fish enclosure (3).

12. The method in accordance with claim 11, **characterized in that** the provided net cage's (1) connection channel (6) in an upper part (65) of its submerged portion (66) is provided with a water-tight jacket (62) and that the connection channel (6) is supplied with water from the surroundings.

13. The method in accordance with claim 12, **characterized in that** the water is taken from a water depth substantially free from plankton.

14. The method in accordance with claim 11, **characterized in that** the provided net cage's (1) connection channel (6) in an upper part (65) of its submerged portion (66) is provided with a watertight jacket (62) and that a medicament made for the bath treatment of fish is supplied to the water within the connection channel (6).

15. Use of a net cage (1) in accordance with claim 1 to prevent physostomous fish from being exposed to toxic, planktonic algae or planktonic crustaceous parasites.

## Patentansprüche

1. Ein Netzkäfig (1) für die Fischzucht, wobei der Netzkäfig (1) ein Fischgehäuse (3) aufweist, welches mit einem Netz (2) ausgestattet ist, welches wasserdurchlässig ist, und eine erste Schwimmvorrichtung (4) auf einer Wasseroberfläche (5), um den Netzkäfig (1) in einer vertikalen Position in einer Wassersäule zu halten, wobei das Fischgehäuse (3) ferner eine eingetauchte, Fisch-entlassende Decke (22) aufweist, wobei die Fisch-entlassende Decke (22) mindestens eine Öffnung (28) aufweist, welche mit einem Verbindungskanal (6) verbunden ist, welcher sich von der Fisch-entlassenden Decke (22) bis an die Wasseroberfläche (5) erstreckt, und mit einer zweiten Schwimmvorrichtung (42; 91; 91') verbunden ist, wobei der Verbindungskanal (6) eingerichtet ist, dass ein sich im Fischgehäuse (3) befindender Fisch spontan im Verbindungskanal (6) hoch an die Wasseroberfläche (5) schwimmen kann und wieder zurück in das Fischgehäuse (3), **dadurch gekennzeichnet, dass** in einem oberen Bereich (64), eine Ummantelung (62) des Verbindungskanals (6) mit einem Auslaufbereich (68) ausgestattet ist, welcher über die Wasseroberfläche (5) hinausragt, und dass die Ummantelung (62) des Verbindungskanals (6) in einem oberen Teil (65) seines eingetauchten Bereichs (66) aus einem der folgenden aufgebaut ist:
- ein wasserdichtes, starres Material;
- ein wasserdichtes Material in Stoffform; und
- ein Plankton-entlassendes Netzmaterial.

2. Der Netzkäfig (1) gemäss Anspruch 1, **dadurch gekennzeichnet, dass** die Seitenwand (24) des Netzkäfigs (1) sich von der ersten Schwimmvorrichtung (4) nach unten hin erstreckt.

3. Der Netzkäfig (1) gemäss Anspruch 1, **dadurch gekennzeichnet, dass** der Auslaufbereich (68) ein wasserdichtes Material aufweist.

4. Der Netzkäfig (1) gemäss Anspruch 1, **dadurch gekennzeichnet, dass** der Auslaufbereich (68) ein Plankton-entlassendes Netzmaterial aufweist.

5. Der Netzkäfig (1) gemäss Anspruch 1, **dadurch gekennzeichnet, dass** die Ummantelung (62) des Verbindungskanals (6) im Bereich (64) welcher über die Wasseroberfläche (5) hinausragt, ein Sprungnetz aufweist.

6. Der Netzkäfig (1) gemäss Anspruch 1, **dadurch gekennzeichnet, dass** der obere Bereich (64) des Verbindungskanals (6) mit einem Vogelnetz (7) bedeckt ist.

7. Der Netzkäfig (1) gemäss Anspruch 1, **dadurch gekennzeichnet, dass** der obere Bereich (64) des Verbindungskanals (6) mit einem Fisch-entlassenden Netz (7) bedeckt ist.

8. Der Netzkäfig (1) gemäss Anspruch 1, **dadurch gekennzeichnet, dass** die Fisch-freilassende Decke (22) ein Netz aufweist.

9. Der Netzkäfig (1) gemäss Anspruch 1, **dadurch gekennzeichnet, dass** der Verbindungskanal (6) eine Klammer (63) aufweist.

10. Der Netzkäfig (1) gemäss Anspruch 1, **dadurch gekennzeichnet, dass** der Netzkäfig (1) ein Vogelnetz-Gestell aufweist, welches als ein Hamsterrad (90) oder ein Turm (96) geformt ist, wobei das Vogelnetz-Gestell mit Rippen (94, 94') ausgestattet ist, welche vom Schwimmring (91, 91') des Vogelnetz-Gestells (90, 96) nach unten hin gerichtet sind, und wobei der Verbindungskanal (6) am Vogelnetz-Gestell (90, 96) befestigt ist.

11. Verfahren zur Zucht von Physostom-Fischen in einem eingetauchten Fischgehäuse (3), um zu verhindern, dass die Fische toxischen Algen oder Parasiten ausgesetzt sind, **gekennzeichnet durch** die folgenden Schritte:
a) Bereitstellen eines Netzkäfigs (1) gemäss Anspruch 1;
b) Bereitstellen von Physostom-Fischen; und
c) Aufbewahren der Fische im Netzkäfig (1), sodass die Fische spontan im Verbindungskanal (6) hoch an die Wasseroberfläche (5) schwimmen können und spontan zurück nach unten in das Fischgehäuse (3) schwimmen können.

12. Verfahren gemäss Anspruch 11, **dadurch gekennzeichnet, dass** der Verbindungskanal (6) des bereitgestellten Netzkäfigs (1) in einem oberen Teil (65) seines eingetauchten Bereichs (66) eine wasserdichte Ummantelung (62) aufweist, und dass der Verbindungskanal (6) mit Wasser aus der Umgebung versorgt wird.

13. Verfahren gemäss Anspruch 12, **dadurch gekennzeichnet, dass** das Wasser aus einer Wassertiefe, welche im Wesentlichen frei von Plankton ist, entnommen wird.

14. Verfahren gemäss Anspruch 11, **dadurch gekennzeichnet, dass** der Verbindungskanal (6) des bereitgestellten Netzkäfigs (1) in einem oberen Teil (65) seines eingetauchten Bereichs (66) eine wasserdichte Ummantelung (62) aufweist, und dass ein Medikament zur Badebehandlung von Fischen dem Wasser innerhalb des Verbindungskanals (6) beigefügt wird.

15. Verwendung eines Netzkäfigs (1) gemäss Anspruch 1, um zu verhindern, dass Physostom-Fische toxischen, planktonischen Algen oder planktonischen krustenartigen Parasiten ausgesetzt sind.

## Revendications

1. Une cage en filet (1) pour pisciculture, la cage en filet (1) incluant une enclos pour poissons (3) pourvue d'un filet (2), qui est capable de laisser passer un débit d'eau; et un premier moyen flottant (4) sur une surface de l'eau (5) pour maintenir la cage en filet (1) en position verticale dans une colonne d'eau, l'enclos pour poissons (3) étant en outre pourvu d'un plafond de blocage de poissons (22) submergé, lequel plafond de blocage de poissons (22) étant muni au moins d'une ouverture (28) qui est reliée à un canal de jonction (6) qui s'étend du plafond de blocage de poissons (22) à la surface de l'eau (5) et qui est reliée à un second moyen flottant (42; 91, 91'), dans lequel le canal de jonction (6) est conçu de manière à permettre à un poisson présent dans l'enclos (3) de remonter spontanément à la surface de l'eau (5) dans le canal de jonction (6), et de redescendre dans l'enclos pour poissons (3), **caractérisée en ce que** dans un partie supérieure (64), une gaine (62) du canal de jonction (6) est munie d'une partie de débordement de vagues (68) faisant saillie au-dessus de la surface de l'eau (5), et que la gaine (62) du canal de jonction (6), dans une partie supérieure (65) de sa partie submergée (66), est constituée d'un parmi :
- un matériau rigide et étanche à l'eau ;
- un matériau étanche à l'eau en forme d'étoffe, et ;
- un matériau de filet à blocage de plancton.

2. Une cage en filet (1) selon la revendication 1, **caractérisée en ce que** la paroi latérale (24) de la cage en filet (1) s'étend vers le bas à partir du premier moyen flottant (4).

3. Une cage en filet (1) selon la revendication 1, **caractérisée en ce que** la partie chicane (68) inclue un matériau étanche à l'eau.

4. Une cage en filet (1) selon la revendication 1, **caractérisée** en ce la partie de débordement de vagues (68) inclut un matériau de filet à blocage de plancton.

5. Une cage en filet (1) selon la revendication 1, **caractérisée en ce que** dans la partie (64) faisant saillie au-dessus de la surface de l'eau (5), la gaine (62) du canal de jonction (6) inclut un filet de saut.

6. Une cage en filet (1) selon la revendication 1, **caractérisée en ce que** la partie supérieure (64) du canal de jonction (6) est recouverte d'un filet à oiseaux (7).

7. Une cage en filet (1) selon la revendication 1, **caractérisée en ce que** la partie supérieure (64) du canal de jonction (6) est recouverte d'un filet de blocage de poissons (7).

8. Une cage en filet (1) selon la revendication 1, **caractérisée en ce que** le plafond (24) de blocage de poissons inclut un filet.

9. Une cage en filet (1) selon la revendication 1, **caractérisée en ce que** le canal de jonction (6) est muni d'une armature (63).

10. Une cage en filet (1) selon la revendication 1, **caractérisée en ce que** la cage en filet (1) est munie d'un support de filet à oiseaux réalisé en tant que roue à hamster (90) ou en tant que tour (96), le support de filet à oiseaux étant pourvu de renforts (94, 94') s'étendant vers le bas à partir de l'anneau flottant (91, 91') du support de filet à oiseaux (90, 96) est le canal de jonction (6) étant attaché au support de filet à oiseaux (90, 96).

11. Un procédé pour l'élevage de poissons physostomes dans un enclos pour poissons (3) submergé pour empêcher l'exposition des poissons à des algues toxique ou des parasites, **caractérisé par** les étapes suivantes:
a) fournir une cage en filet (1) selon la revendication 1 ;
b) fournir des poissons physostomes ; et
c) maintenir des poissons dans la cage en filet (1) de manière que les poisson puissent spontanément remonter à la surface d'eau (5) dans le canal de jonction (6) et puissent spontanément redescendre vers le bas de l'enclos pour poissons (3).

12. Le procédé selon la revendication 11, **caractérisé en ce que** le canal de jonction (6) de la cage en filet (1) fournie est pourvu dans une partie supérieure (65) de sa partie submergée (66) d'une gaine étanche à l'eau (62) et que le canal de jonction (6) est alimenté en eau à partir de l'environnement.

13. Le procédé selon la revendication 12, **caractérisé en ce que** l'eau est prélevée à une profondeur d'eau sensiblement libre de plancton.

14. Le procédé selon la revendication 11, **caractérisée en ce que** le canal de jonction (6) de la cage en filet (1), dans une partie supérieure (65) de sa partie submergé (66), est pourvu d'une gaine étanche à l'eau (62) et qu'un médicament fait pour bain de traitement de poissons est fourni à l'eau dans le canal de jonction (6).

15. L'utilisation d'une cage en filet (1) selon la revendication 1, pour empêcher des poissons physostome d'être exposés à des algues planctoniques toxiques ou à des parasites planctoniques crustacés.
